# EUROPÄISCHE PATENTSCHRIFT

(11) **EP 2 139 710 B1**
(45) Veröffentlichungstag und Bekanntmachung des Hinweises auf die Patenterteilung: **24.11.2010**
(21) Anmeldenummer: 08717507.1
(22) Anmeldetag: 07.03.2008
(51) Int. Cl.: B60H 1/34

(54) **LUFTAUSSTRÖMER**
AIR OUTLET
DIFFUSEUR D'AIR

(30) Priorität: 24.04.2007 DE 102007019602
(43) Veröffentlichungstag der Anmeldung: 06.01.2010
(73) Patentinhaber: Faurecia Innenraum Systeme GmbH, 76767 Hagenbach (DE)
(72) Erfinder: SCHULZ, Martin, 76187 Karlsruhe (DE)
(74) Vertreter: Richardt, Markus Albert
(86) Internationale Anmeldenummer: PCT/EP2008/052760
(87) Internationale Veröffentlichungsnummer: WO 2008/128820

(56) Entgegenhaltungen:
- FR-A- 2 872 260
- FR-A- 2 886 383
- FR-A- 2 886 384
- US-A- 2 232 573

## Beschreibung

Die Erfindung betrifft einen Luftausströmer, sowie ein Verfahren zum Betreiben eines Luftausströmers.

Aus dem Stand der Technik sind verschiedene Luftausströmer bekannt. Insbesondere ist aus der DE 100 46 721 B4 eine Luftdüse bekannt, welche in ein Kraftfahrzeug, vorzugsweise in dessen Armaturentafel, einbaubar ist. Zum Luftaustritt ist dabei ein kugelabschnittsförmig ausgebildetes Lüftungsteil vorgesehen, welches dreh- und schwenkbar an einem Lagerelement angeordnet ist, welches an einem Lüftungskanal angeschlossen ist.

Die US 2005/0239390 A1 beschreibt eine Ventilationsdüse zum Einbau in ein Kraftfahrzeug, wobei die Düse ein Gehäuse aufweist, sowie einen sphärisch geformten Düsenkopf mit Auslassöffnungen, wobei der Düsenkopf drehbar im Gehäuse gelagert ist. Des Weiteren ist aus der US 2004/0224625 A1 ein Abluftstutzen für ein Ventilationssystem in einem Kraftfahrzeug bekannt, welches eine Zirkulationskammer aufweist, welche durch ein Gehäuse mit einer gewölbten Form begrenzt ist. Der Abluftstutzen weist des Weiteren bewegliche Luftablenkungen auf, um den Luftstrom in eine vorgegebene Richtung zu lenken.

Die EP 1 544 007 A1 beschreibt ein Luftverteilungssystem mit einer Düse, wobei sich das System zur Luftverteilung des Coanda-Effekts bedient. In ähnlicher Weise bedient sich auch die EP 1 544 005 A1 des Coanda-Effekts. Die Schrift offenbart ein Luftverteilungssystem für eine Armaturentafel eines Kraftfahrzeugs mit einer Vielzahl von Düsen.

Aus der FR 28 86 382 A1 ist ein Luftausströmer bekannt, bei dem das Düsengehäuse und das Luftleitelement zur Erzeugung des Coanda-Effekts derart ausgebildet sind, dass ein gerichteter Luftstahl aus der Luftaustrittsöffnung austritt.

Aus der US 2 232 573 A, der als nächstliegender Stand der Technik angesehen wird, ist ein gattungsgemäßer Luftausströmer bekannt.

Der Erfindung liegt dem gegenüber die Aufgabe zugrunde, einen verbesserten Luftausströmer, sowie ein verbessertes Verfahren zum Betreiben eines Luftausströmers zu schaffen.

Die der Erfindung zugrunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Erfindungsgemäß wird ein Luftausströmer mit einem Düsengehäuse geschaffen, wobei der Luftausströmer eine in axialer Richtung zum Düsengehäuse befindliche Lufteintrittsöffnung und eine der Lufteintrittsöffnung im Wesentlichen gegenüberliegende Luftaustrittsöffnung aufweist. Ferner weist der Luftausströmer eininnerhalb des Düsengehäuses befindliches kegelförmiges Luftleitelement auf, wobei das Luftleitelement mit einer Längsachse in axialer Richtung zum Düsengehäuse angeordnet ist, wobei das Luftleitelement mit seiner Spitzseite zur Luftaustrittsöffnung hin angeordnet ist, wobei das Luftleitelement eine in seiner Längsachse befindliche durchgängige Öffnung aufweist. Der Luftausströmer weist ferner einen Manipulator auf, wobei der Manipulator zur Aufnahme durch die durchgängige Öffnung des Luftleitelements vorgesehen ist. Auf der der Lufteintrittsöffnung zugewandten Seite ist an dem Manipulator ein Stopfen ausgebildet, wobei der Stopfen in axialer Richtung durch den Manipulator verschiebbar ausgebildet ist, wobei der Stopfen zur formschlüssigen Abdeckung der Lufteintrittsöffnung ausgebildet ist. Der Luftausströmer weist ferner erste flächenförmige Elemente auf, wobei die ersten flächenförmigen Elemente zwischen der Oberfläche des Luftleitelements und der Oberfläche des Düsengehäuses angeordnet sind, wobei das Düsengehäuse und das Luftleitelement zur Erzeugung des Coanda-Effekts ausgebildet sind, so dass ein gerichteter Luftstrahl aus der Luftaustrittsöffnung austritt. Unter dem Begriff "flächenförmig" wird hier eine im Wesentlichen flächige Ausdehnung verstanden.

Unter dem Coanda-Effekt wird dabei allgemein ein Phänomen bezeichnet, bei welchem, wie im vorliegenden Fall, ein Gasstrahl an einer Oberfläche entlangläuft, ohne sich davon abzulösen. Normale Gasströmungen können einer konvexen Oberfläche nur begrenzt folgen und lösen sich gewöhnlicherweise von dieser Oberfläche ab. Im Falle einer Strömung hingegen, welche sich des Coanda-Effekts bedient, folgt die Strömung z. B. in Form eines Luftstroms einer konvexen Oberflächenkontur, ohne sich von dieser Oberfläche abzulösen. Die Verwendung von Luftausströmern, welche auf dem Coanda-Effekt basieren, hat unter anderem den Vorteil, dass in einfacher Weise die Richtung eines Luftstroms gelenkt werden kann, ohne dabei eine aufwendige Lamellen- und Luftleitelement-Konstruktion verwenden zu müssen.

An zumindest einem der ersten flächenförmigen Elemente ist ein zweites flächenförmiges Element angeordnet, wobei das zweite flächenförmige Element an einem Ende des ersten flächenförmigen Elements angeordnet ist, wobei das zweite flächenförmige Element im Wesentlichen senkrecht zu dem ersten flächenförmigen Element angeordnet ist. Die Verwendung des ersten flächenförmigen Elementes hat den Vorteil, dass in einfacher Weise eine noch exaktere Lenkung des Luftstroms unter Verwendung des Coanda-Effekts gewährleistet ist. Das zweite flächenförmige Element dient hingegen dazu, das kegelförmige Luftleitelement in dem Düsengehäuse zu halten und eine saubere Bewegungsmöglichkeit des kegelförmigen Luftleitelements im Düsengehäuse zu gewährleisten.

Nach einer Ausführungsform der Erfindung sind die ersten flächenförmigen Elemente mit dem Luftleitelement oder dem Düsengehäuse verbunden. Das zweite flächenförmige Element berührt zumindest teilweise in einem Kontaktbereich das Luftleitelement oder das Düsengehäuse. Dabei weist das zweite flächenförmige Element im Wesentlichen die Form des im Kontaktbereich berührenden Luftleitelements oder Düsengehäuses auf. In dem Kontaktbereich weist das zweite flächenförmige Element zumindest teilweise eine erste Silikonfläche auf. Durch die Verwendung von elastischen Silikonflächen werden Klappergeräusche in dem Kontaktbereich zum Luftleitelement oder zum Düsengehäuse vermieden. Außerdem wird eine Bewegung des Luftleitelements im Düsegehäuse mit niedriger Reibung ermöglicht. Anstatt der Verwendung von Silikonflächen bietet sich dabei auch jegliches Kunststoffmaterial an, welches den Anforderungen bezüglich Elastizität und gleichzeitig gewünschtem Reibwiderstand genügt.

Nach einer Ausführungsform der Erfindung sind die ersten flächenförmigen Elemente als Luftleitflächen ausgebildet. Wie bereits erwähnt, hat dies den Vorteil, dass ein Luftstrom durch die Verwendung der zusätzlichen Luftleitflächen einfach in eine gewünschte Richtung gelenkt werden kann.

Nach einer Ausführungsform der Erfindung bildet das zweite flächenförmige Element eine erste Brücke zwischen zwei der ersten flächenförmigen Elemente. Dabei weist die erste Brücke zumindest eine Nut zur Aufnahme der ersten Silikonfläche auf. Die Brücke umschließt das Luftleitelement bezüglich der axialen Richtung des Düsengehäuses vollständig. Die Verwendung der erfindungsgemäßen ringförmigen Brücke mit der Nut zur Aufnahme der ersten Silikonfläche hat den Vorteil, dass in einfacher Weise z. B. O-Ringe als Silikonflächen verwendet werden können, wodurch Herstellungskosten reduziert werden können. Außerdem ist durch die Verwendung der ringförmigen Brücke eine saubere Lagerung des Luftleitelements im Düsengehäuse gewährleistet. Ferner wird durch die symmetrische Ausbildung der ringförmigen Brücke eine Verminderung von Luftströmgeräuschen ermöglicht, da aufgrund der sauberen Abdichtung durch den Silikon-O-Ring Schlitze und Lücken vermieden werden, durch welche ein Luftstrom hindurch austreten könnte. Vorzugsweise weist die ringförmige Brücke zwei Silikon-O-Ringe auf, so dass eine saubere Lagerung des Luftleitelements im Düsengehäuse und eine entsprechend saubere Führung zur Ausrichtung des Luftleitelements im Düsengehäuse gewährleistet sind.

Nach einer Ausführungsform der Erfindung weist der Luftausströmer ferner ein stiftförmiges Element auf, wobei das stiftförmige Element auf dem zweiten flächenförmigen Element im Wesentlichen senkrecht zu dem zweiten flächenförmigen Element angeordnet ist. Dabei weisen das Luftleitelement oder das Düsengehäuse eine Aussparung zur Aufnahme des stiftförmigen Elements auf. Diese Aussparung ist durch eine im Wesentlichen in axiale Richtung des Düsengehäuses verlaufende Aussparung ausgebildet. Das stiftförmige Element weist zumindest teilweise eine zweite Silikonfläche auf. Die Verwendung des stiftförmigen Elements, z. B. in Form eines Zapfens, hat den Vorteil, dass das Luftleitelement in dem Düsengehäuse auf der einen Seite beweglich gelagert ist, auf der anderen Seite hingegen die Bewegung in vorgegebene Richtungen eingeschränkt ist. So ist z. B. durch die Verwendung des stiftförmigen Elements gewährleistet, dass das Luftleitelement um die Achse des stiftförmigen Elements verdrehbar ist und außerdem in Richtung der Aussparung zur Aufnahme des stiftförmigen Elements verkippbar ist. Auf der anderen Seite ist jedoch eine Verdrehung des Luftleitelements um die Achse des Düsengehäuses nicht mehr möglich.

Nach einer Ausführungsform der Erfindung weist der Manipulator einen durch die Luftaustrittsöffnung hindurchreichenden Griff auf. Das Luftleitelement ist durch den Griff in einer Richtung senkrecht zur Längsachse des Luftleitelements verkippbar und/oder verdrehbar im Düsengehäuse angeordnet. Durch die Verwendung eines Griffs ist es einem Benutzer des Luftausströmers in einfacher Weise möglich, den Luftstrom in eine gewünschte Richtung zu lenken.

Nach einer Ausführungsform der Erfindung weist das zweite flächenförmige Element und/oder das stiftförmige Element und/oder die Aussparung Rastmittel zur räumlichen Fixierung des Luftleitelements in zumindest einer vorbestimmten Position auf. Die Verwendung von Rastmitteln hat den Vorteil, dass in einfacher Weise die relative Lage des Luftleitelements im Düsengehäuse vorgegeben werden kann, ohne dass sich diese Lage durch Rüttelbewegungen, wie sie z. B. in einem Kraftfahrzeug auftreten, verändert wird. Da das stiftförmige Element zumindest teilweise eine zweite Silikonfläche aufweist, werden außerdem durch die Rüttelbewegungen mögliche Klappergeräusche vermieden. Die geringe Reibung der Silikonfläche ermöglicht eine einfache Bewegung des stiftförmigen Elements in der zugehörigen Aussparung. Allerdings kann auf entsprechende Rastmittel verzichtet werden, wenn das stiftförmige Element mit einer entsprechenden Kunststoffoberfläche so ausgelegt wird, dass ein stufenloses Bewegen des stiftförmigen Elements mit geringem Kraftaufwand durch den Benutzer aber dennoch hinreichend großer Stabilität der Fixierung durch einen entsprechenden Anpressdruck des stiftförmigen Elements in der Aussparung gewährleistet ist, so dass durch eventuelle Rüttelbewegungen das stiftförmige Element in seiner durch den Benutzer vorbestimmten Lage nicht verschoben wird.

Nach einer Ausführungsform der Erfindung ist der Stopfen durch eine Drehbewegung des Griffs um eine Längsachse des Luftleitelements und/oder durch eine Ziehbewegung und/oder Schiebebewegung des Griffs in der axialen Richtung verschiebbar ausgebildet. Dabei weist das Luftleitelement einen Arretierungsmechanismus zur Fixierung des Manipulators in zumindest zwei vorbestimmten Positionen auf. Dieser Arretierungsmechanismus kann durch einen Push-Push-Arretierungsmechanismus ausgebildet sein. Durch die Bewegung des Stopfens in die axiale Richtung kann der Luftstrom in seiner gewünschten Stärke reguliert werden. Im Falle der Drehbewegung weisen der Manipulator und das Luftleitelement z. B. ein entsprechendes Gewinde auf. Durch den Push-Push Arretierungsmechanismus hingegen ist es möglich, in einer einfachen Weise durch eine reine Drückbewegung die gewünschte Stärke des Luftstromes einzustellen. Ein stufenweises Verstellen der Stärke des Luftstromes hat dabei den Vorteil einer einfachen und reproduzierbaren Einstellmöglichkeit durch den Benutzer.

Nach einer Ausführungsform der Erfindung weist der Luftausströmer ferner dritte flächenförmigen Elemente auf, wobei die dritten flächenförmigen Elemente auf der der Luftaustrittsöffnung zugewandten Seite an dem Luftleitelement angeordnet sind. Die dritten flächenförmigen Elemente sind dabei vorzugsweise durch eine zweite Brücke miteinander verbunden, wobei die Brücke das Luftleitelement bezüglich der axialen Richtung des Düsengehäuses vollständig umschließt. Durch die Verwendung der dritten flächenförmigen Elemente kann eine zusätzliche Richtwirkung des Luftstroms bewirkt werden. Die aerodynamische Qualität wird somit nochmals verbessert. Außerdem hat die Verwendung von dritten flächenförmigen Elementen, welche durch eine ringförmige Brücke miteinander verbunden sind, einen ästhetischen Effekt: Ein Benutzer sieht beim Aufblick auf den erfindungsgemäßen Luftausströmer keine dunkle ungewohnte Öffnung, sondern eine lamellenartige Struktur, wie er sie von anderen Luftausströmern nach dem Stand der Technik gewohnt ist. Dennoch bietet der erfindungsgemäße Luftausströmer dem Benutzer eine höhere aerodynamische Qualität.

In einem weiteren Aspekt betrifft die Erfindung ein Verfahren zur Verwendung eines Luftausströmers mit einem Düsengehäuse, einer in axialer Richtung zum Düsengehäuse befindlichen Lufteintrittsöffnung und einer im Wesentlichen der Lufteintrittsöffnung gegenüberliegenden Luftaustrittsöffnung. In dem Düsengehäuse ist ferner ein kegelförmiges Luftleitelement angeordnet, wobei das Luftleitelement mit einer Längsachse in axialer Richtung zum Düsengehäuse angeordnet ist, wobei das Luftleitelement mit seiner Spitzseite zur Luftaustrittsöffnung hin angeordnet ist und wobei das Luftleitelement eine in seiner Längsachse befindliche durchgängige Öffnung aufweist. Ein Manipulator ist zur Aufnahme durch die durchgängige Öffnung des Luftleitelements vorgesehen. An der der Lufteintrittsöffnung zugewandten Seite ist an dem Manipulator ein Stopfen ausgebildet, wobei der Stopfen in die axiale Richtung durch den Manipulator verschiebbar ausgebildet ist und wobei der Stopfen zur formschlüssigen Abdeckung der Lufteintrittsöffnung ausgebildet ist. Der Luftausströmer weist des Weiteren erste flächenförmige Elemente auf, wobei die ersten flächenförmigen Elemente zwischen der Oberfläche des Luftleitelements und der Oberfläche des Düsengehäuses angeordnet sind, wobei das Düsengehäuse und das Luftleitelement zur Erzeugung des Coanda-Effekts ausgebildet sind, so dass ein gerichteter Luftstrahl aus der Luftaustrittsöffnung austritt.

An zumindest einem der ersten flächenförmigen Elemente ist ein zweites flächenförmiges Element angeordnet, wobei das zweite flächenförmige Element an einem Ende des ersten flächenförmigen Elements angeordnet ist, wobei das zweite flächenförmige Element im Wesentlichen senkrecht zu dem ersten flächenförmigen Element angeordnet ist. Das Verfahren zur Verwendung des erfindungsgemäßen Luftausströmers umfasst dabei den Schritt des Öffnens oder Schließens der Luftzufuhr durch Verschieben des Manipulators in die axiale Richtung und/oder durch Drehen des Manipulators um die Achse des Düsengehäuses und damit Öffnen oder Schließen der Lufteintrittsöffnung durch den Stopfen.

Nach einer Ausführungsform der Erfindung wird das Luftleitelement durch Verkippung eines am Manipulator ausgebildeten, durch die Luftaustrittsöffnung hindurchreichenden Griffs in einer Richtung senkrecht zur Längsachse des Luftleitelements ausgerichtet.

Nach einer Ausführungsform der Erfindung weist das zweite flächenförmige Element Rastmittel auf, wobei das Luftleitelement durch die Rastmittel räumlich in zumindest einer vorbestimmten Position fixiert wird.

Nach einer Ausführungsform der Erfindung weist der Luftausströmer ferner ein stiftförmiges Element auf, wobei das stiftförmige Element auf dem zweiten flächenförmigen Element im Wesentlichen senkrecht zu dem zweiten flächenförmigen Element angeordnet ist und wobei das Luftleitelement oder das Düsengehäuse eine Aussparung zur Aufnahme des stiftförmigen Elements aufweisen, wobei das stiftförmige Element und/oder die Aussparung zweite Rastmittel aufweisen, wobei das Luftleitelement durch die Rastmittel räumlich in zumindest einer vorbestimmten Position fixiert wird. Die Verwendung des stiftförmigen Elements hat den Vorteil, dass eine Kipp- und Schwenkbewegung des Luftleitelements gewährleistet ist, wohingegen ein Verdrehen des Luftleitelements im Düsengehäuse um die Achse des Luftleitelements nicht möglich ist. Dies wird insbesondere dann relevant, wenn durch Drehen des Manipulators um die Achse des Luftleitelements der Stopfen in eine bestimmte Position zur Regulierung des Luftstroms gebracht werden soll.

Nach einer Ausführungsform der Erfindung weist das Luftleitelement einen Arretierungsmechanismus auf, wobei durch Ziehen oder Schieben des Manipulators in die axiale Richtung und/oder durch Drehen des Manipulators um die Achse des Düsengehäuses der Stopfen durch den Arretierungsmechanismus in zumindest zwei vorbestimmten Positionen fixiert wird.

Nach einer Ausführungsform der Erfindung weist das Luftleitelement einen Push-Push-Arretierungsmechanismus auf, wobei der Stopfen durch den Push-Push-Arretierungsmechanismus in zumindest zwei vorbestimmten Positionen fixiert wird.

Im Weiteren werden Ausführungsformen der Erfindung anhand der Zeichnungen näher erläutert. Es zeigen:
- Figur 1:: eine schematische Ansicht einer Ausführungsform eines erfindungs- gemäßen Luftausströmers,
- Figur 2:: eine weitere schematische Ansicht einer Ausführungsform eines erfin- dungsgemäßen Luftausströmers,
- Figur 3:: eine schematische Ansicht einer Ausführungsform eines erfindungs- gemäßen Luftausströmers,
- Figur 4:: eine weitere schematische Ansicht einer Ausführungsform eines erfin- dungsgemäßen Luftausströmers,
- Figur 5:: ein Blockdiagramm eines Verfahrens zur Verwendung eines erfin- dungsgemäßen Luftausströmers.

Einander entsprechende Elemente sind im Folgenden mit gleichen Bezugszeichen gekennzeichnet.

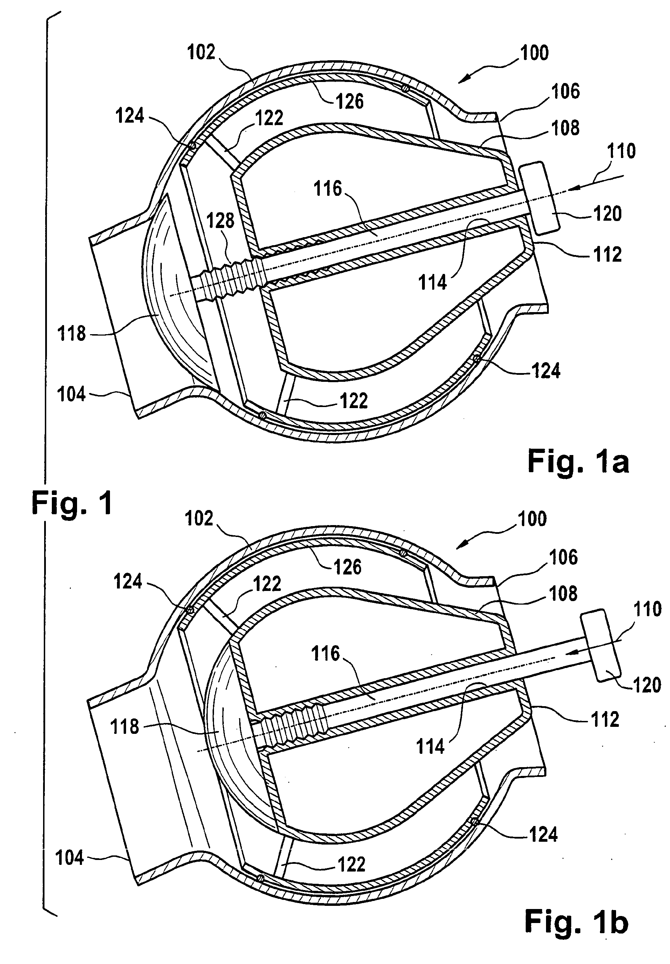

Die Fig. 1 zeigt eine schematische Ansicht einer Ausführungsform eines erfindungsgemäßen Luftausströmers 100. Der Luftausströmer 100 ist dabei vorzugsweise zur Verwendung im Frontbereich der Fahrgastzelle eines Kraftfahrzeugs vorgesehen. Es ist jedoch auch eine Verwendung in anderen Transportmitteln wie Schienenfahrzeugen oder Flugzeugen möglich.

Der Luftausströmer 100 besteht aus einem Düsengehäuse 102, welches eine Lufteintrittsöffnung 104 sowie eine der Lufteintrittsöffnung 104 im Wesentlichen gegenüberliegenden Luftaustrittsöffnung 106 aufweist. Das Düsengehäuse 102 hat dabei eine bauchförmige gewölbte Form. In dem Düsengehäuse befindet sich kegelförmiges Luftleitelement 108, wobei das Luftleitelement 108 mit einer Längsachse 110 in axialer Richtung zum Düsengehäuse 102 angeordnet ist, wobei das Luftleitelement 108 mit seiner Spitzseite 112 zur Luftaustrittsöffnung 106 hin angeordnet ist, wobei das Luftleitelement 108 eine in seiner Längsachse 110 befindliche durchgehende Öffnung 114 aufweist. Der Luftausströmer 100 weist außerdem einen Manipulator 116 auf, wobei der Manipulator 116 zur Aufnahme durch die durchgehende Öffnung 114 des Luftleitelements 108 vorgesehen ist. Auf der der Lufteintrittsöffnung 104 zugewandten Seite ist an dem Manipulator 116 ein Stopfen 118 ausgebildet, wobei der Stopfen 118 in axialer Richtung 110 durch den Manipulator 116 verschiebbar ausgebildet ist, wobei der Stopfen 118 zur formschlüssigen Abdeckung der Lufteintrittsöffnung 104 ausgebildet ist. So weist der Stopfen 118 im vorliegenden Beispiel eine konvexe Form auf, wodurch in der Fig. 1 a der Stopfen 118 formschlüssig die Lufteintrittsöffnung 104 abdeckt. Dadurch wird ein Luftstrom ausgehend von der Lufteintrittsöffnung 104 zur Luftaustrittsöffnung 106 unterbrochen. Durch Verschieben des Stopfens 118 mittels des Manipulators 116 ist es somit möglich, die Intensität des durch die Luftaustrittsöffnung 106 austretenden Luftstroms zu regulieren.

Durch z. B. eine Ziehbewegung in die axiale Richtung 110 eines an dem Manipulator 116 durch die Luftaustrittsöffnung 106 hindurchreichenden Griffs 120 ist es möglich, den Stopfen 118 wie in der Fig. 1b gezeigt von der Lufteintrittsöffnung 104 zu entfernen. Um dabei die Stärke des Luftstroms sowie das Öffnen und Schließen der Lufteintrittsöffnung 104 durch den Stopfen 118 gezielt zu steuern, weist das Luftleitelement einen Arretierungsmechanismus zur Fixierung des Stopfens 118 in zumindest zwei vorbestimmten Positionen auf. Im vorliegenden Beispiel ist ein Arretierungsmechanismus in Form von Rastelementen 128 ausgebildet. Die Rastelemente 128 befinden sich dabei an dem Luftleitelement 108 und/oder an dem Manipulator 116. Durch die Rastelemente 128 ist ein stufenweises Verstellen der Stärke des Luftstroms durch eine Bewegung des Manipulators 116 in axialer Richtung zum Düsengehäuse 102 möglich. Alternativ zu einer Schiebebewegung des Manipulators 116 ist auch eine Drehbewegung des Manipulators 116 möglich. In diesem Fall können z. B. die Rastelemente 128 durch ein entsprechendes Gewinde ersetzt werden. Allgemein ist jedoch eine beliebige mechanische Anbindung des Stopfens 118 an den Manipulator 116 möglich, über welchen durch eine Bewegung des Manipulators 116 der Stopfen 118 in eine gewünschte Position bewegt werden kann.

Durch die konvexe Form des Stopfens 118 und die kegelförmige Form des Luftleitelements 108, sowie die entsprechende Form des Düsengehäuses 102 läuft der Luftstrom aufgrund des Coanda-Effekts an den entsprechenden Oberflächen des Stopfens 118, des Luftleitelements 108 sowie des Düsengehäuses 102 entlang, ohne sich von diesen Oberflächen zu lösen. Dadurch ist durch das Luftleitelement 108 eine Fließrichtung des Luftstroms in Richtung der Luftaustrittsöffnung 106 vorgegeben. Die Richtung des Luftstroms kann durch Verkippen des Luftleitelements 108 über den Griff 120 in Richtung senkrecht zur Längsachse 110 des Luftleitelements 108 verändert werden.

Um weiter die Richtwirkung des durch die Luftaustrittsöffnung 106 hindurchtretenden Luftstroms zu verbessern, sind zwischen der Oberfläche des Luftleitelements 108 und der Oberfläche des Düsengehäuses 102 erste flächenförmige Elemente 122 angeordnet. Dabei sind die ersten flächenförmigen Elemente 122 entweder mit dem Luftleitelement 108 oder dem Düsengehäuse 102 fest verbunden. Vorzugsweise weisen dabei die ersten flächenförmigen Elemente 122 eine Finnenform auf, welche mit ihrer Längsachse in der Richtung der Längsachse 110 des Luftleitelements 108 ausgerichtet sind. An den ersten flächenförmigen Elementen 122 sind jeweils zweite flächenförmige Elemente 126 angeordnet, wobei die zweiten flächenförmigen Elemente 126 an einem Ende der ersten flächenförmigen Elemente 122 angeordnet sind, wobei die zweiten flächenförmigen Elemente 126 im Wesentlichen senkrecht zu den ersten flächenförmigen Elementen 122 angeordnet sind. Im vorliegenden Fall sind die ersten flächenförmigen Elemente 122 einstückig mit dem Luftleitelement 108 ausgebildet. Ebenso sind die zweiten flächenförmigen Elemente 126 einstückig mit den ersten flächenförmigen Elementen 122 ausgebildet und befinden sich daher zwischen den ersten flächenförmigen Elementen 122 und der inneren Oberfläche des Düsengehäuses 102. Die zweiten flächenförmigen Elemente 126 weisen dabei im Wesentlichen die Form des im Kontaktbereich berührenden Düsengehäuses 102 auf. Damit dienen die zweiten flächenförmigen Elemente zum einen der indirekten Halterung und Lagerung des Luftleitelements 108. Zum anderen dienen die zweiten flächenförmigen Elemente 126 dazu, um eine Bewegung des luftleitelements 108 in dem Düsengehäuse 102 zur Ausrichtung des Luftstroms zu ermöglichen. Damit eine solche Bewegung zur Ausrichtung des Luftleitelements 108 möglichst leichtgängig ist, weisen die zweiten flächenförmigen Elemente 126 in dem Kontaktbereich Silikonflächen 124 auf. Durch die Verwendung von Silikonflächen 124 ist ein sauberes Gleiten der zweiten flächenförmigen Elemente 126 in dem Düsengehäuse 102 bei gleichzeitigem Toleranzausgleich entlang des entsprechenden Kontaktbereichs möglich.

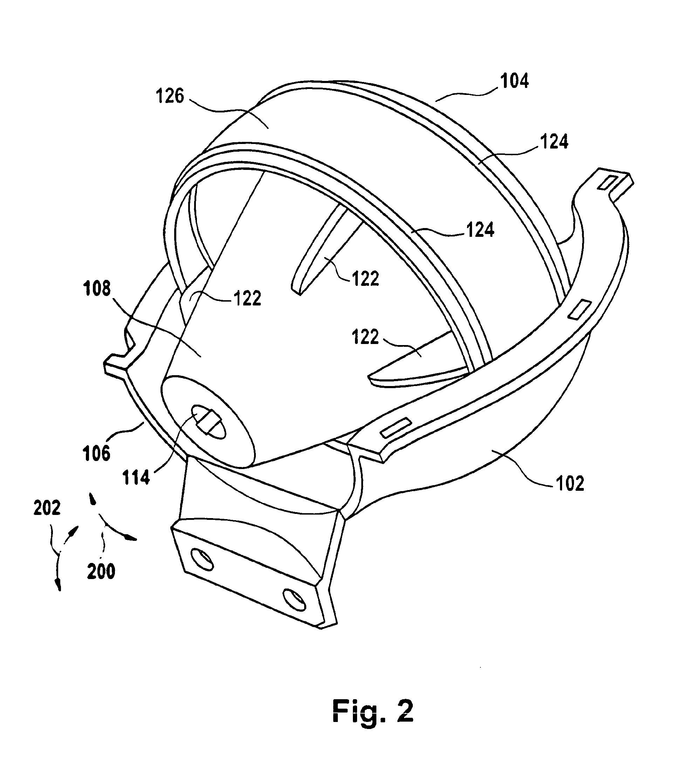

Die Fig. 2 zeigt eine schematische Ansicht einer Ausführungsform eines erfindungsgemäßen Luftausströmers. Im Fall der Fig. 2 bildet das zweite flächenförmige Element 126 eine Brücke zwischen zwei der ersten flächenförmigen Elemente 122. Deutlich sichtbar ist hier die finnenartige Ausführung der ersten flächenförmigen Elemente 122, wodurch eine gezielte Richtwirkung des Luftstroms von der Lufteintrittsöffnung 104 zur Luftaustrittsöffnung 106 gewährleistet ist. Die durch das zweite flächenförmige Elemente 126 gebildete Brücke umschließt das Luftleitelement 108 bezüglich der axialen Richtung des Düsengehäuses 102 vollständig. Ferner weist die Brücke 126 zwei Nuten zur Aufnahme der Silikonfläche 124 auf. Im vorliegenden Fall sind die beiden Silikonflächen durch O-Ringe ausgebildet, welche in die entsprechenden Nuten eingebettet sind. Durch die Verwendung zweier O-Ringe ist eine gleichmäßige Führung des Luftleitelements 108 in dem Düsengehäuse 102 gewährleistet. Das Luftleitelement 108 kann durch eine entsprechende Bewegung eines durch die Öffnung 114 hindurchreichenden Manipulators 116 über dessen Griff 120 in den Richtungen 200 und 202 ausgerichtet werden. Dadurch kann der durch die Luftaustrittsöffnung 106 austretende Luftstrom bequem in eine gewünschte Richtung gelenkt werden. Da außerdem die Silikonfläche 124 in Form von O-Ringen eine Dichtwirkung zwischen dem zweiten flächenförmigen Element 126 und der inneren Oberfläche des Düsengehäuses 102 hat, ist außerdem gewährleistet, dass keine Pfeifgeräusche durch Teilluftströme z. B. zwischen Schlitzen, welche zwischen dem zweiten flächenförmigen Element 126 und der inneren Oberfläche 102 des Düsengehäuses vorhanden sind, auftreten.

Um das Luftleitelement 108 in einer räumlichen Position bezüglich des Düsengehäuses 102 zu fixieren, bietet sich die Verwendung von Rastelementen an, welche hier (nicht gezeigt) auf der äußeren Oberfläche des zweiten flächenförmigen Elementes 126 und/oder an den entsprechenden gegenüberliegenden Flächen der Innenseite des Düsengehäuses 102 angeordnet sein können. Alternativ zur Verwendung von Rastelementen ist es auch möglich, die Silikonflächen 124 in Form der O-Ringe so auszulegen, dass ein entsprechend hoher Anpressdruck der Silikonflächen 124 an die innere Oberfläche des Düsengehäuses 102 entsteht. Dadurch ist eine Bewegung des Luftleitelements 108 zwar etwas schwergängiger, eine einmal eingestellte Ausrichtung des Luftleitelements bezüglich des Düsengehäuses 102 bleibt jedoch auch bei Erschütterungen oder Rüttelbewegungen des Luftausströmers bestehen. Dadurch ist eine stufenlose Verstellung der Richtwirkung des Luftstroms möglich.

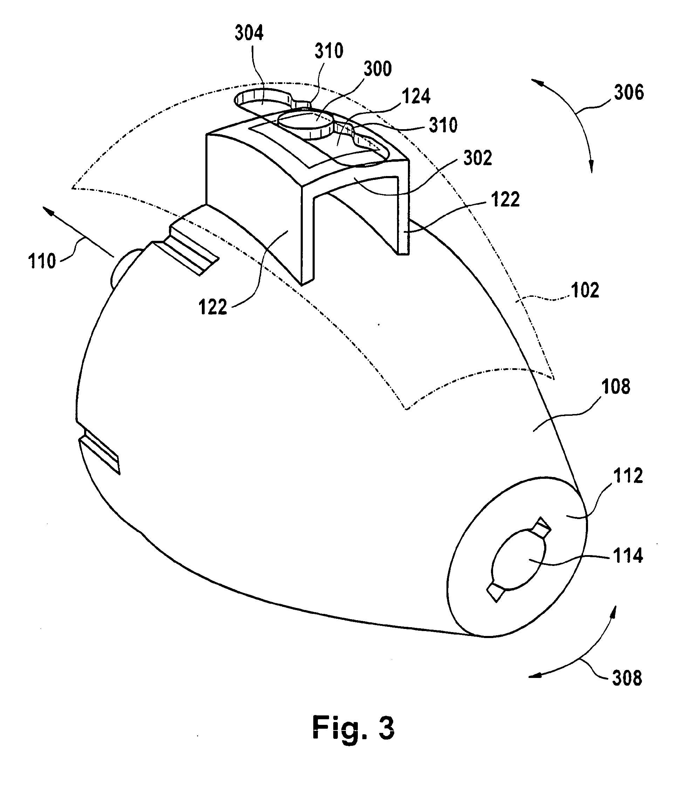

Die Fig. 3 zeigt eine schematische Ansicht einer Ausführungsform eines weiteren erfindungsgemäßen Luftausströmers. In der Fig. 3 sind erste flächenförmige Elemente 122 senkrecht zur Oberfläche des Luftleitelements 108, vorzugsweise einstückig, ausgebildet. Die beiden ersten flächenförmigen Elemente 122 sind über eine Brücke 302 miteinander verbunden. Diese Brücke 302 weist dabei im Wesentlichen die Form des im Kontaktbereich zwischen der Brücke 302 und der Innenseite des Düsengehäuses 102 berührenden Fläche auf. In dem Kontaktbereich der Brücke 302 mit der inneren Oberfläche des Düsengehäuses 102 ist auf der Brücke 302 zumindest teilweise eine Silikonfläche 124 ausgebildet. Diese Silikonfläche 124 dient dazu, um bei einer Bewegung des Luftleitelements 108 im Düsengehäuse 102 und der damit auftretenden Reibung an der Kontaktfläche zwischen der inneren Oberfläche des Düsengehäuses 102 und der Brücke 302 auftretenden Reibung zu minimieren. Auf der Brücke 302 ist ferner ein stiftförmiges Element in Form eines Zapfens 300 ausgebildet, wobei der Zapfen 300 im Wesentlichen senkrecht zur gewölbten Oberfläche der Brücke 302 angeordnet ist. Zur Aufnahme des Zapfens 300 weist das Düsengehäuse 102 eine entsprechende Aussparung 304 auf. Diese Aussparung 304 weist dabei eine im Wesentlichen in axialer Richtung verlaufende längliche Form auf. Dies dient dazu, um eine geführte Kippbewegung des Luftleitelements 108 im Düsengehäuse 102 in die Richtung 306 zu ermöglichen. Durch die zylindrische Form des Zapfens 300 ist es außerdem möglich, das Luftleitelement 108 um eine Richtung 308 zu verdrehen. Eine Verdrehung des Luftleitelements 108 um die Längsachse 110 ist jedoch nicht mehr möglich. Dies ist insbesondere dann von Nutzen, wenn ein entsprechender hier nicht gezeigter Stopfen 118 durch eine Drehbewegung des Manipulators 116 verschoben werden soll. Bei einer solchen Drehbewegung darf sich das Luftleitelement 108 nicht mitbewegen, was durch den Zapfen 300 gewährleistet ist.

Um eine saubere Führung des Zapfens 300 in der Aussparung 304 zu ermöglichen, weist der Zapfen zumindest teilweise eine weitere Silikonfläche auf. Diese Silikonfläche dient auch hier wieder dazu, um einen Toleranzausgleich zwischen dem Zapfen 300 und der Aussparung 304 zu gewährleisten.

Um das Luftleitelement 108 in einer oder mehreren räumlichen vorbestimmten Positionen zu fixieren, weisen die Brücke 302 und/oder das stiftförmige Element in Form des Zapfens 300 und/oder die Aussparung 304 Rastmittel 310 auf. Dadurch kann in einfacher und reproduzierbarer Weise ein Benutzer des Luftausströmers die Richtung des durch die Luftaustrittsöffnung 106 austretenden Luftstroms regulieren, ohne dass diese Richtung durch z.B. Erschütterungen des Luftausströmers verändert wird.

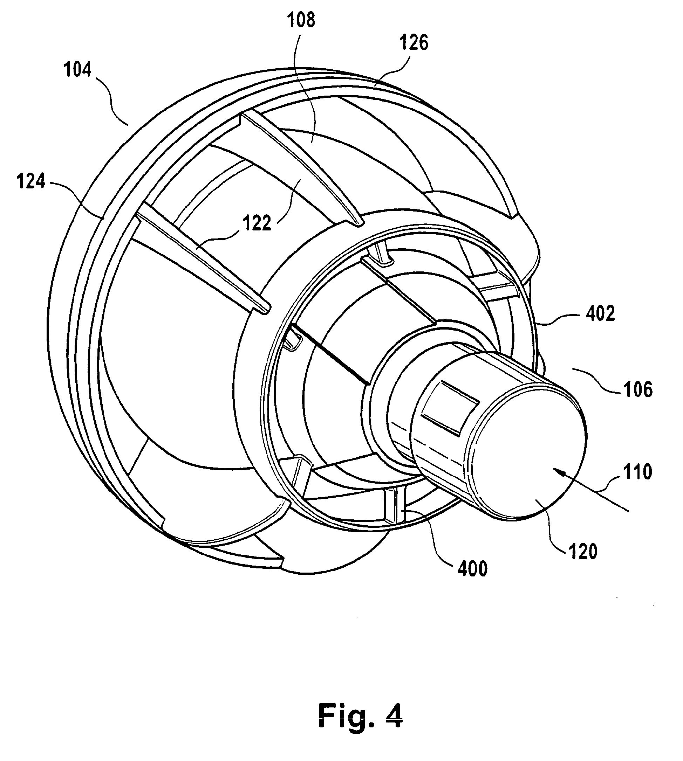

Die Fig. 4 zeigt eine weitere schematische Ansicht einer Ausführungsform eines erfindungsgemäßen Luftausströmers. Der Luftausströmer der Fig. 4 weist ähnlich wie der Luftausströmer der Fig. 2 ein zweites flächenförmiges Element 126 in Form einer Brücke auf, wobei die Brücke das Luftleitelement 108 bezüglich der axialen Richtung 110 des Düsengehäuses 102 vollständig umschließt. Ferner weist das Luftleitelement 108 in der Fig. 4 dritte flächenförmige Elemente 400 auf, wobei die dritten flächenförmigen Elemente auf der der Luftaustrittsöffnung 106 zugewandten Seite an dem Luftleitelement 108 angeordnet sind. Die dritten flächenförmigen Elemente 400 weisen dabei auch wieder eine Finnenform auf, ähnlich wie die der ersten flächenförmigen Elemente 122. Die dritten flächenförmigen Elemente 400 sind mit ihrer Fläche im Wesentlichen parallel zur Längsachse 110 des Luftleitelements 108 angeordnet. Die dritten flächenförmigen Elemente 400 sind durch eine Brücke 402 miteinander verbunden, wobei die Brücke 402 das Luftleitelement bezüglich der axialen Richtung 110 des Düsengehäuses 102 bzw. des Luftleitelements 108 vollständig umschließt.

Durch die Verwendung der dritten flächenförmigen Elemente 400, sowie der Brücke 402 wird die aerodynamische Qualität des austretenden Luftstroms weiter verbessert. Ferner hat die Verwendung einer zusätzlichen Brücke 400, welche auf der der Luftaustrittsöffnung 106 zugewandten Seite an dem Luftleitelement 108 angeordnet ist, den Vorteil, dass ein Benutzer, welcher auf die Luftaustrittsöffnung 106 schaut, ein gewohntes ästhetisches Bild eines Luftausströmers nach dem Stand der Technik sieht, hingegen dennoch den Vorteil der verbesserten aerodynamischen Qualität des erfindungsgemäßen Luftausströmers nutzen kann.

Durch eine Drehbewegung des Griffs 120 um die Längsachse 110 des Luftleitelements 108 und/oder durch eine Ziehbewegung und/oder Schiebebewegung des Griffs 120 in der axialen Richtung 110 kann ein auf der der Lufteintrittsöffnung 104 zugewandten Seite angeordneter Stopfen 118 in die axiale Richtung 110 verschoben werden. Dabei weist das Luftleitelement 108 einen hier nicht gezeigten Arretierungsmechanismus zur Fixierung des an dem Griff 120 ausgebildeten Manipulators 116 in zumindest zwei vorbestimmten Positionen auf. Dieser Arretierungsmechanismus kann dabei z. B. durch einen Push-Push Arretierungsmechanismus ausgebildet sein. Dies bedeutet, dass durch ausschließtiches Drücken des Griffs 120 in die axiale Richtung der Stopfen 118 in zumindest zwei vorbestimmten Positionen fixiert werden kann.

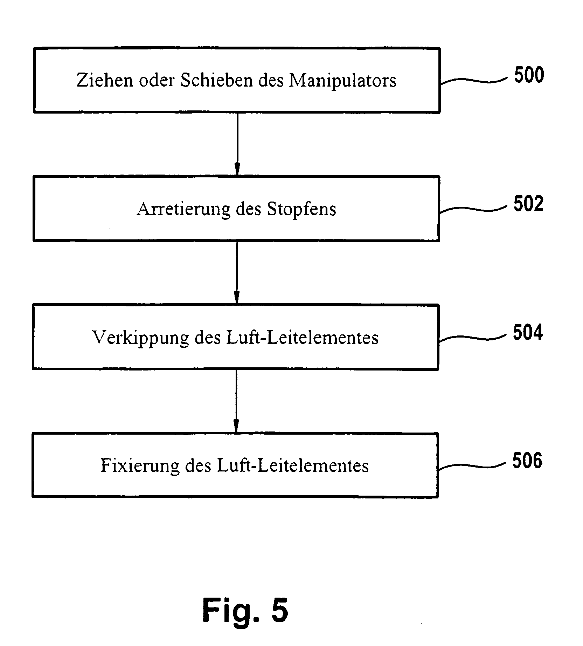

Die Fig. 5 zeigt ein Blockdiagramm eines Verfahrens zum Betreiben eines erfindungsgemäßen Luftausströmers. Der Luftausströmer besteht dabei aus einem Düsengehäuse, einer in axialer Richtung zum Düsengehäuse befindlichen Lufteintrittsöffnung und einer im Wesentlichen der Lufteintrittsöffnung gegenüberliegenden Luftaustrittsöffnung. Ferner besteht der Luftausströmer aus einem kegelförmigen Luftleitelement, wobei das Luftleitelement mit einer Längsachse in axialer Richtung zum Düsengehäuse angeordnet ist, wobei das Luftleitelement mit seiner Spitzseite zur Luftaustrittsöffnung hin angeordnet ist und wobei das Luftleitelement eine in seiner Längsachse befindliche durchgängige Öffnung aufweist. Ferner umfasst der Luftausströmer einen Manipulator, wobei der Manipulator zur Aufnahme durch die durchgängige Öffnung des Luftleitelements vorgesehen ist. Auf der der Lufteintrittsöffnung zugewandten Seite ist an dem Manipulator ein Stopfen ausgebildet, wobei der Stopfen in die axiale Richtung durch den Manipulator verschiebbar ausgebildet ist und wobei der Stopfen zur formschlüssigen Abdeckung der Lufteintrittsöffnung ausgebildet ist. Ferner umfasst der Luftausströmer erste flächenförmige Elemente, wobei die ersten flächenförmigen Elemente zwischen der Oberfläche des Luftleitelements und der Oberfläche des Düsengehäuses angeordnet sind, wobei das Düsengehäuse und das Luftleitelement zur Erzeugung des Coanda-Effekts ausgebildet sind, so dass ein gerichteter Luftstrahl aus der Luftaustrittsöffnung austritt. An zumindest einem der ersten flächenförmigen Elemente ist ein zweites flächenförmiges Element angeordnet, wobei das zweite flächenförmige Element an einem Ende des ersten flächenförmigen Elements angeordnet ist und wobei das zweite flächenförmige Element im Wesentlichen senkrecht zu dem ersten flächenförmigen Element angeordnet ist.

In Schritt 500 erfolgt das Öffnen oder Schließen der Luftzufuhr durch Ziehen oder Schieben des Manipulators in die axiale Richtung des Düsengehäuses. Alternativ kann der Stopfen auch durch eine Drehbewegung des Manipulators um die Achse des Luftleitelements bzw. des Düsengehäuses bewegt werden. Vorzugsweise weist das Luftleitelement einen Arretierungsmechanismus auf, womit in Schritt 502 eine Fixierung des Stopfens durch den Arretierungsmechanismus in einer vorbestimmten Position erfolgt. In Schritt 504 wird das Luftleitelement durch Verkippung in einer Richtung senkrecht zur Längsachse des Luftleitelements mit Hilfe eines am Manipulator ausgebildeten Griffs ausgerichtet. Auch in diesem Fall sind vorzugsweise zwischen dem Luftleitelement und der Innenseite des Düsengehäuses Mittel zur Arretierung des Luftleitelements im Düsengehäuse ausgebildet. Dadurch kann in Schritt 506 eine Fixierung des Luftleitelements in einer vorgegebenen Position im Düsengehäuse erzielt werden.

### Bezugszeichenliste

- 100: Luftausströmer
- 102: Düsengehäuse
- 104: Lufteintrittsöffnung
- 106: Luftaustrittsöffnung
- 108: Luftleitelement
- 110: Längsachse
- 112: Spitzseite
- 114: Öffnung
- 116: Manipulator
- 118: Stopfen
- 120: Griff
- 122: erstes flächenförmiges Element
- 124: Silikonfläche
- 126: zweites flächenförmiges Element
- 128: Rastelement

- 200: Richtung
- 202: Richtung

- 300: Zapfen
- 302: Brücke
- 304: Aussparung
- 306: Richtung
- 308: Richtung
- 310: Rastmittel

- 400: drittes flächenförmiges Element
- 402: Brücke

## Patentansprüche

1. Luftausströmer (100) mit
- einem Düsengehäuse (102),
- einer in axialer Richtung zum Düsengehäuse (102) befindlichen Lufteintrittsöffnung (104) und einer der Lufteintrittsöffnung (104) im Wesentlichen gegenüberliegenden Luftaustrittsöffnung (106),
- einem kegelförmigen Luftleitelement (108), wobei das Luftleitelement (108) mit einer Längsachse (110) in axialer Richtung zum Düsengehäuse (102) angeordnet ist, wobei das Luftleitelement (108) mit seiner Spitzseite (112) zur Luftaustrittsöffnung (106) hin angeordnet ist, wobei das Luftleitelement (108) eine in seiner Längsachse (110) befindliche durchgängige Öffnung (114) aufweist,
- einem Manipulator (116), wobei der Manipulator (116) zur Aufnahme durch die durchgängige Öffnung (114) des Luftleitelements (108) vorgesehen ist,
- einem auf der Lufteintrittsöffnung (104) zugewandten Seite an dem Manipulator (116) ausgebildeten Stopfen (118), wobei der Stopfen (118) in axialer Richtung durch den Manipulator (116) verschiebbar ausgebildet ist, wobei der Stopfen (118) zur formschlüssigen Abdeckung der Lufteintrittsöffnung (104) ausgebildet ist,
- einen ersten flächenförmigen Elementen (122), wobei die ersten flächenförmigen Elemente (122) zwischen der Oberfläche des Luftleitelements (108) und der Oberfläche des Düsengehäuses (102) angeordnet sind,
wobei das Düsengehäuse (102) und das Luftleitelement (108) ausgebildet sind, dass ein gerichteter Luftstrahl aus der Luftaustrittsöffnung (106) austritt, **dadurch gekennzeichnet, dass** das Düsengehaüse (102) und das Luftleitelement (108) sur Erzeugung des Coanda-Effekts ausgebildet sind, dass der Stopfen (118) innerhalb der Düsengehaüses (102) verschiebbar ausgebildet ist, und dass an zumindest einem der ersten flächenförmigen Elemente (122) ein zweites flächenförmiges Element (126) angeordnet ist, wobei das zweite flächenförmige Element (126) an einem Ende des ersten flächenförmigen Elements (122) angeordnet ist, wobei das zweite flächenförmige Element (126) im Wesentlichen senkrecht zu dem ersten flächenförmigen Element (122) angeordnet ist.

2. Luftausströmer (100) nach Anspruch 1, wobei die ersten flächenförmigen Elemente (122) mit dem Luftleitelement (108) oder dem Düsengehäuse (102) verbunden sind.

3. Luftausströmer (100) nach Anspruch 2, wobei das zweite flächenförmige Element (126) zumindest teilweise in einem Kontaktbereich das Luftleitelement (108) oder das Düsengehäuse (102) berührt.

4. Luftausströmer (100) nach Anspruch 3, wobei das zweite flächenförmige Element (126) im Wesentlichen die Form des im Kontaktbereich berührenden Luftleitelements (108) oder Düsengehäuses (102) aufweist.

5. Luftausströmer (100) nach Anspruch 3, wobei das zweite flächenförmige Element (126) zumindest teilweise in dem Kontaktbereich eine erste Silikonfläche (124) aufweist.

6. Luftausströmer (100) nach einem der vorigen Ansprüche, wobei die ersten flächenförmigen Elemente (122) als Luftleitflächen ausgebildet sind.

7. Luftausströmer (100) nach Anspruch 1, wobei das zweite flächenförmige Element (126) eine erste Brücke zwischen zwei der ersten flächenförmigen Elemente (122) bildet.

8. Luftausströmer (100) nach Anspruch 7, wobei die erste Brücke zumindest eine Nut zur Aufnahme der ersten Silikonfläche aufweist.

9. Luftausströmer (100) nach Anspruch 8, wobei die erste Brücke das Luftleitelement (108) bezüglich der axialen Richtung des Düsengehäuses (102) vollständig umschließt.

10. Luftausströmer (100) nach Anspruch 1, ferner mit einem stiftförmigen Element (300), wobei das stiftförmige Element (300) auf dem zweiten flächenförmigen Element (126) im Wesentlichen senkrecht zu dem zweiten flächenförmigen Element (126) angeordnet ist.

11. Luftausströmer (100) nach Anspruch 10, wobei das Luftleitelement (108) oder das Düsengehäuse (102) eine Aussparung (304) zur Aufnahme des stiftförmigen Elements (300) aufweisen.

12. Luftausströmer (100) nach Anspruch 11, wobei die Aussparung (304) durch eine im Wesentlichen in axiale Richtung des Düsengehäuses (102) verlaufende Aussparung (304) ausgebildet ist.

13. Luftausströmer (100) nach Anspruch 10, wobei das stiftförmige Element (300) zumindest teilweise eine zweite Silikonfläche aufweist.

14. Luftausströmer (100) nach einem der vorigen Ansprüche, wobei der Manipulator (116) einen durch die Luftaustrittsöffnung (106) hindurchreichenden Griff (120) aufweist.

15. Luftausströmer (100) nach einem der vorigen Ansprüche, wobei das Luftleitelement (108) durch den Griff (120) in einer Richtung (200; 202; 306; 308) senkrecht zur Längsachse (110) des Luftleitelements (108) verkippbar und/oder verdrehbar im Düsengehäuse (102) angeordnet ist.

## Claims

1. Air outlet (100) having
- a nozzle housing (102),
- an air inlet opening (104) in the axial direction with respect to the nozzle housing (102) and an air outlet opening (106) substantially opposite the air inlet opening (104),
- a conical air-guiding element (108), wherein the air-guiding element (108) is arranged with a longitudinal axis (110) in the axial direction with respect to the nozzle housing (102), wherein the pointed side (112) of the air-guiding element (108) is arranged towards the air outlet opening (106), and wherein the air-guiding element (108) has a continuous opening (114) located in the longitudinal axis (110) thereof,
- a manipulator (116), wherein in manipulator (116) is provided for reception by the continuous opening (114) in the air-guiding element (108),
- a stopper (118) which is formed on the manipulator (116) on the side facing the air inlet opening (104), wherein the stopper (118) is designed to be displaceable in the axial direction by means of the manipulator (116), and wherein the stopper (118) is designed to cover the air inlet opening (104) in a form-fitting manner,
- a first planiform element (122), wherein the first planiform elements (122) are arranged between the surface of the air-guiding element (108) and the surface of the nozzle housing (102),
wherein the nozzle housing (102) and the air-guiding element (108) are designed such that a directed air jet emerges from the air outlet opening (106), **characterized in that** the nozzle housing (102) and the air-guiding element (108) are designed to produce the Canda effect, **in that** the stopper (118) is designed to be displaceable within the nozzle housing (102), and **in that** a second planiform element (126) is arranged on at least one of the first planiform elements (122), the second planiform element (126) being arranged at one end of the first planiform element (122), and the second planiform element (126) being arranged substantially perpendicularly to the first planiform element (122).

2. Air outlet (100) according to Claim 1, wherein the first planiform elements (122) are connected to the air-guiding element (108) or to the nozzle housing (102).

3. Air outlet (100) according to Claim 2, wherein at least part of the second planiform element (126) is in contact with the air-guiding element (108) or the nozzle housing (102) in a contact region.

4. Air outlet (100) according to Claim 3, wherein the second planiform element (126) is substantially in the shape of the air-guiding element (108) or nozzle housing (102) in contact in the contact region.

5. Air outlet (100) according to Claim 3, wherein at least part of the second planiform element (126) in the contact region has a first silicon surface (124).

6. Air outlet (100) according to one of the preceding claims, wherein the first planiform elements (122) are designed as air-guiding surfaces.

7. Air outlet (100) according to Claim 1, wherein the second planiform element (126) forms a first bridge between two of the first planiform elements (122).

8. Air outlet (100) according to Claim 7, wherein the first bridge has at least one groove for receiving the first silicon surface.

9. Air outlet (100) according to Claim 8, wherein the first bridge completely encloses the air-guiding element (108) with respect to the axial direction of the nozzle housing (102).

10. Air outlet (100) according to Claim 1, furthermore with a pin-shaped element (300), wherein the pin-shaped element (300) on the second planiform element (126) is arranged substantially perpendicular to the second planiform element (126).

11. Air outlet (100) according to Claim 10, wherein the air-guiding element (108) or the nozzle housing (102) has a cutout (304) for receiving the pin-shaped element (300).

12. Air outlet (100) according to Claim 11, wherein the cutout (304) is formed by a cutout (304) running substantially in the axial direction of the nozzle housing (102).

13. Air outlet (100) according to Claim 10, wherein at least part of the pin-shaped element (300) has a second silicon surface.

14. Air outlet (100) according to one of the preceding claims, wherein the manipulator (116) has a handle (120) reaching through the air outlet opening (106).

15. Air outlet (100) according to one of the preceding claims, wherein in the air-guiding element (108) is arranged in the nozzle housing (102) in a manner such that it can be tilted and/or rotated by the handle (120) in a direction (200; 202; 306; 308) perpendicular to the longitudinal axis (110) of the air-guiding element (108).

## Revendications

1. Diffuseur d'air (100) comprenant
- un boîtier de buse (102),
- une ouverture d'entrée d'air (104) située dans la direction axiale par rapport au boîtier de buse (102) et une ouverture de sortie d'air (106) essentiellement opposée à l'ouverture d'entrée d'air (104),
- un élément de guidage d'air de forme conique (108), l'élément de guidage d'air (108) étant disposé avec un axe longitudinal (110) dans la direction axiale par rapport au boîtier de buse (102), l'élément de guidage d'air (108) étant disposé avec son côté de pointe (112) vers l'ouverture de sortie d'air (106), l'élément de guidage d'air (108) présentant une ouverture traversante (114) située dans son axe longitudinal (110),
- un manipulateur (116), le manipulateur (116) étant prévu pour être reçu à travers l'ouverture traversante (114) de l'élément de guidage d'air (108),
- un bouchon (118) réalisé sur le côté tourné vers l'ouverture d'entrée d'air (104) sur le manipulateur (116), le bouchon (118) étant réalisé de manière déplaçable dans la direction axiale à travers le manipulateur (116), le bouchon (118) étant réalisé pour recouvrir l'ouverture d'entrée d'air (104) par engagement positif,
- des premiers éléments de forme plane (122), les premiers éléments de forme plane (122) étant disposés entre la surface de l'élément de guidage d'air (108) et la surface du boîtier de buse (102),
le boîtier de buse (102) et l'élément de guidage d'air (108) étant réalisés de telle sorte qu'un jet d'air orienté sorte de l'ouverture de sortie d'air (106), **caractérisé en ce que** le boîtier de buse (102) et l'élément de guidage d'air (108) sont réalisés pour produire l'effet Coanda, **en ce que** le bouchon (118) est réalisé de manière déplaçable à l'intérieur du boîtier de buse (102), et **en ce qu'**un deuxième élément de forme plane (126) est disposé sur au moins l'un des premiers éléments de forme plane (122), le deuxième élément de forme plane (126) étant disposé à une extrémité du premier élément de forme plane (122), le deuxième élément de forme plane (126) étant disposé essentiellement perpendiculairement au premier élément de forme plane (122).

2. Diffuseur d'air (100) selon la revendication 1, dans lequel les premiers éléments de forme plane (122) sont connectés à l'élément de guidage d'air (108) ou au boîtier de buse (102).

3. Diffuseur d'air (100) selon la revendication 2, dans lequel le deuxième élément de forme plane (126) vient en contact au moins partiellement dans une région de contact avec l'élément de guidage d'air (108) ou avec le boîtier de buse (102).

4. Diffuseur d'air (100) selon la revendication 3, dans lequel le deuxième élément de forme plane (126) présente essentiellement la forme de l'élément de guidage d'air (108) ou du boîtier de buse (102) en contact avec lui dans la région de contact.

5. Diffuseur d'air (100) selon la revendication 3, dans lequel le deuxième élément de forme plane (126) présente une première surface de silicone (124) au moins en partie dans la région de contact.

6. Diffuseur d'air (100) selon l'une quelconque des revendications précédentes, dans lequel les premiers éléments de forme plane (122) sont réalisés sous forme de surfaces de guidage d'air.

7. Diffuseur d'air (100) selon la revendication 1, dans lequel le deuxième élément de forme plane (126) forme un premier pont entre deux des premiers éléments de forme plane (122).

8. Diffuseur d'air (100) selon la revendication 7, dans lequel le premier pont présente au moins une rainure pour recevoir la première surface de silicone.

9. Diffuseur d'air (100) selon la revendication 8, dans lequel le premier pont entoure complètement l'élément de guidage d'air (108) par rapport à la direction axiale du boîtier de buse (102).

10. Diffuseur d'air (100) selon la revendication 1, comprenant en outre un élément en forme de goupille (300), l'élément en forme de goupille (300) étant disposé sur le deuxième élément de forme plane (126) essentiellement perpendiculairement au deuxième élément de forme plane (126).

11. Diffuseur d'air (100) selon la revendication 10, dans lequel l'élément de guidage d'air (108) ou le boîtier de buse (102) présentent un évidement (304) pour recevoir l'élément en forme de goupille (300).

12. Diffuseur d'air (100) selon la revendication 11, dans lequel l'évidement (304) est réalisé par un évidement (304) s'étendant essentiellement dans la direction axiale du boîtier de buse (102).

13. Diffuseur d'air (100) selon la revendication 10, dans lequel l'élément en forme de goupille (300) présente au moins en partie une deuxième surface de silicone.

14. Diffuseur d'air (100) selon l'une quelconque des revendications précédentes, dans lequel le manipulateur (116) présente une manette (120) traversant l'ouverture de sortie d'air (106).

15. Diffuseur d'air (100) selon l'une quelconque des revendications précédentes, dans lequel l'élément de guidage d'air (108) est disposé dans le boîtier de buse (102) de manière à pouvoir basculer et/ou à pouvoir tourner au moyen de la manette (120) dans une direction (200 ; 202 ; 306 ; 308) perpendiculairement à l'axe longitudinal (110) de l'élément de guidage d'air (108).
